# EUROPÄISCHE PATENTSCHRIFT

(11) **EP 2 625 732 B1**
(45) Veröffentlichungstag und Bekanntmachung des Hinweises auf die Patenterteilung: **07.01.2015**
(21) Anmeldenummer: 11764481.5
(22) Anmeldetag: 29.09.2011
(51) Int. Cl.: H01M 2/10, H01M 2/20, B60L 11/18, B62D 21/15, B60K 1/04, H01M 10/04

(54) **FAHRZEUG MIT EINER CRASHENERGIE ABSORBIERBAREN TRAKTIONSBATTERIE**
VEHICLE WITH AN IMPACT ENERGY ABSORBING TRACTION BATTERY
VÉHICULE AVEC UNE BATTERIE DE TRACTION QUI ABSORBE L'ÉNERGIE D'IMPACT

(30) Priorität: 09.10.2010 DE 102010048102
(43) Veröffentlichungstag der Anmeldung: 14.08.2013
(73) Patentinhaber: Audi AG, 85045 Ingolstadt (DE)
(72) Erfinder: ENNING, Norbert, 85095 Denkendorf (DE)
(74) Vertreter: Herbst, Matthias Heinz
(86) Internationale Anmeldenummer: PCT/EP2011/004854
(87) Internationale Veröffentlichungsnummer: WO 2012/045408

(56) Entgegenhaltungen:
- EP-A1- 1 992 513
- WO-A2-03/092088
- DE-A1-102005 054 435
- DE-A1-102008 010 822
- DE-A1-102008 059 973
- DE-A1-102009 006 991
- DE-C1- 4 235 394
- JP-A- 2005 050 616

## Beschreibung

Die Erfindung betrifft ein Fahrzeug mit einem zumindest teilweise elektrischen Antrieb nach dem Oberbegriff des Patentanspruches 1.

Bei Hybridfahrzeugen oder bei Fahrzeugen mit reinem Elektroantrieb werden Traktionsbatterien eingesetzt. Diese sind als bauraumintensive Bauteile entweder im Vorderwagen- oder Hintenivagenbereich angeordnet und damit im Crashfall einer hohen Verformungsgefahr ausgesetzt.

Um eine unfallbedingte Zerstörung der Traktionsbatterie zu vermeiden, ist aus der DE 10 2008 010 829 A1 ein gattungsgemäßes Kraftfahrzeug mit einer solchen Traktionsbatterie bekannt. Das Batteriegehäuse der Traktionsbatterie ist in zwei miteinander verbindbaren Batteriegehäuseteilen aufgeteilt. Die beiden Batteriegehäuseteile sind so zueinander ausgerichtet, dass die Batterie insgesamt vor Zerstörung bei einem Aufprallunfall geschützt ist.

Um einerseits bei einen Crashfall einen Insassenschutz zu gewährleisten und andererseits eine weitgehende Umwandlung der Aufprallenergie in Verformungsarbeit zu gewährleisten, sind moderne Kraftfahrzeuge in Deformationszonen, die im Crashfall energieabsorbierend wirken, und in Zonen hoher Bauteilfestigkeit unterteilt. Eine solche Zone hoher Bauteilfestigkeit ist z. B. der in Fahrtrichtung vor den Pedalen befindliche Karosseriebereich. Dieser Karosseriebereich ist hochsteif ausgeführt, um unfallbedinge Fehlstellungen der Pedale zu vermeiden, die eine Gefährdung für den Fahrer darstellen können.

Im oben genannten Stand der Technik sind die beiden Gehäuseteile des Batteriegehäuses derart formstabil ausgelegt, dass aus Gründen der Kurzschlusssicherheit sowie der Flüssigkeits- und Gasdichtheit die Gehäuseteile nahezu ohne Verformung verbleiben können. Dies erfordert jedoch einen hohen Materialeinsatz bei der Auslegung des Batteriegehäuses. Zudem ist das Batteriegehäuse als einfaches Blockelement nicht bei der Auslegung einer vorzusehenden Knautschzone des Fahrzeuges berücksichtigt.

DE 42 35 394 C1 offenbart ebenfalls ein gattungsgemäßes Kraftfahrzeug.

Die Aufgabe der Erfindung besteht darin, ein Fahrzeug mit einer Traktionsbatterie bereitzustellen, bei dem das Crashverhalten in einfacher Weise verbessert ist.

Die Aufgabe ist durch die Merkmale des Patentanspruches 1 gelöst. Bevorzugte Weiterbildungen der Erfindung sind in den Unteransprüchen offenbart.

Im Abkehr von der bisher bekannten Auslegung eines Fahrzeuges mit Traktionsbatterie ist erfindungsgemäß die Bauteilsteifigkeit der Traktionsbatterie nicht erhöht worden, um eine Batterie-Zerstörung zu vermeiden, sondern ist die Traktionsbatterie gezielt als ein Deformationselement ausgelegt, das sich im Crashfall über einen vordefinierten Deformationsweg verformen kann und dadurch Aufprallenergie absorbieren kann. Gemäß dem kennzeichnenden Teil des Patentanspruches 1 weist hierzu die Fahrbatterie einen im Crashfall deformierbaren Deformationsbereich auf, der in einer vordefinierten Deformationszone des Kraftfahrzeuges angeordnet ist. Die Fahrbatterie ist dabei so ausgelegt, dass sie bei einer Verformung über den Deformationsweg schadenfrei bleibt.

Die Fahrbatterie kann einen Speicherblock zur Speicherung der elektrischen Energie aufweisen. Dieser kann eine Mehrzahl von insbesondere elektrochemisch bzw. galvanisch arbeitenden Speicherzellen umfassen, die gegebenenfalls in Reihe geschaltet sind. Die Speicherzellen können über elektrisch leitfähige Kontaktelemente mit Stromversorgungsleitungen des Fahrzeugs verbunden sein.

Die Anordnung der elektrisch leitfähigen Kontaktelemente der Fahrbatterie sind von vorrangiger Bedeutung, um im Crashfall eine Kurzschlusssicherheit zu gewährleisten. Vor diesem Hintergrund können die Kontaktelemente der Fahrbatterie nicht einem als Deformationszone ausgelegten Fahrzeugbereich, sondern vielmehr in der Zone hoher Bauteilsteifigkeit angeordnet sein. Im Unterschied dazu kann der Speicherblock den im Crashfall deformierbaren Deformationsbereich der Fahrbatterie bilden und als solcher in einer Deformationszone des Fahrzeugs angeordnet sein.

Um eine zerstörungsfreie Verformung der Speicherzellen zu erreichen, können diese von einer einfach verformbaren, biegeschlaffen sowie folienartigen Hülle umschlossen sein. Die einzelnen Speicherzellen im Speicherblock können darüberhinaus nicht unmittelbar aneinander gestapelt sein, sondern über vorgegebene freie Deformationsspalte voneinander beabstandet sein. Die freien Deformationsspalte können im normalen Fahrbetrieb luftdurchströmt sein, um eine Kühlung der Speicherzellen zu bewirken.

Der aus den einzelnen Speicherzellen bestehende Speicherblock kann in einem Batteriegehäuse gas- und flüssigkeitsdicht eingeschlossen sein, um gegebenenfalls ein unfallbedingtes Austreten schädlicher Elektrolyseflüssigkeit und/oder -gase aus der Fahrbatterie zu vermeiden. Das Batteriegehäuse ist jedoch in Abkehr zum oben erwähnten Stand der Technik nicht bauteilfest bzw. formstabil ausgelegt, sondern vielmehr aus einem einfach deformierbaren Material hergestellt. Beispielhaft kann ein gummiartiges, hochzähes Hüllmaterial verwendet werden, das auch bei hoher Verformung gas- und flüssigkeitsdicht bleibt, wie es beispielsweise bei Kraftstofftankblasen bereits Anwendung findet.

Zur weiteren Steigerung der Kurzschlusssicherheit können die elektrisch leitfähigen Anschlusselemente der Fahrbatterie auf der, einer wahrscheinlichen, crashbedingten Krafteinleitung abgewandten Seite der Batterie angeordnet sein. In diesem Fall sind daher die deformierbar ausgelegten Speicherzellen den sicherheitskritischen Anschlusselementen in der Kraftflussrichtung im Crashfall vorgelagert. In dieser Kraftflussrichtung kann der Fahrbatterie zudem ein weiteres Schutzelement vorgelagert sein, das etwa eine Schottwand oder dergleichen ist, das die deformierbaren Speicherzellen bzw. das deformierbare Batteriegehäuse vor einem Durchstoßen mittels spitzer Gegenstände schützt.

In einer weiteren Ausführungsvariante kann die Fahrbatterie unmittelbar im Vorderwagenbereich des Fahrzeuges angeordnet sein und als Deformationselement zur Crashabsorbtion bei einem Frontaufprall ausgelegt sein. In diesem Fall ist im Hinblick auf eine Kurzschlusssicherheit der deformierbare Speicherblock den Anschlusselementen der Fahrbatterie in der Fahrtrichtung vorgelagert, während die Anschlusselemente in horizontaler Richtung im Fahrzeugheck zugewandt sind. Im Vorderwagenbereich ist aufgrund baulicher Gegebenheiten der Karosserieabschnitt zwischen den beiden seitlichen Federbeinaufnahmen bereits hochsteif ausgelegt. Bevorzugt ist es daher, wenn die Anschlussklemmen der Fahrbatterie in Fahrzeuglängsrichtung in etwa auf Höhe der Federbeinauflagen im Vorderwagen des Fahrzeuges positioniert sind.

Alternativ dazu kann die Fahrbatterie auch im Hinterwagenbereich angeordnet sein und als ein Deformationselement zur Crashabsorbtion bei einem Heckaufprall ausgelegt sein. Entsprechend können hier die Anschlusselemente der Fahrbatterie in der Fahrtrichtung dem Speicherblock vorgelagert sein. Bei einem Heckaufprall wird daher der rückseitige Stoßfänger zunächst gegen den deformierbaren Speicherblock gedrückt, und zwar unter Abbau der kinetischen Aufprallenergie.

Nachfolgend sind zwei Ausführungsbeispiel der Erfindung anhand der beigefügten Figuren beschrieben.

Es zeigen:
- Fig. 1: die Außenkontur eines Fahrzeuges in einer Ansicht von oben, bei dem im Vorderwagenbereich eine Traktionsbatterie für ein elektrisches Antriebssystem angeordnet ist; und
- Fig. 2: in einer Ansicht entsprechend der Fig. 1 ein Fahrzeug mit einer im Hinterwagenbereich angeordneten Fahrbatterie.

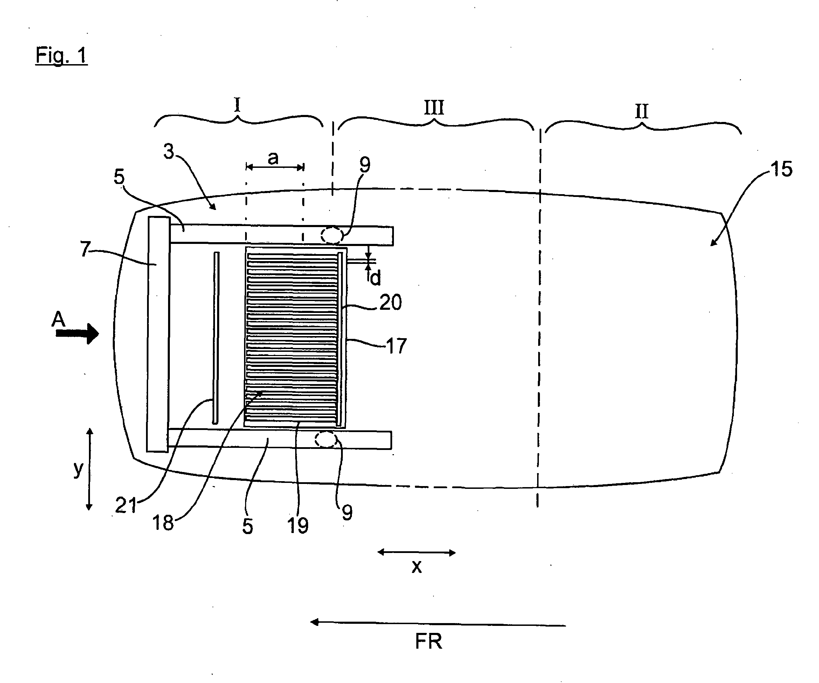

In der Fig. 1 ist grob schematisch ein Fahrzeug skizziert, dessen Antriebssystem zumindest eine nicht dargestellte Elektromaschine aufweist, die über eine wiederaufladbare Fahrbatterie 1 mit elektrischer Energie versorgt wird. In der Fig. 1 ist die Fahrbatterie 1 im Vorderwagenbereich 3 des Kraftfahrzeuges angeordnet. Wie in der Fig. 1 weiter angedeutet ist, erstrecken sich im Vorderwagenbereich 3 zwei seitliche Karosserielängsträger 5, die fahrzeugfrontseitig in einen quer verlaufenden Stoßfänger 7 abschließen. An den beiden Längsträgern 5 im Vorderwagenbereich 3 sind jeweils seitliche Federbeinaufnahmen 9 der Radaufhängungen der Vorderräder 13 ausgebildet.

Das Fahrzeug ist gemäß der Fig. 1 in unterschiedliche Zonen aufgeteilt, nämlich einer Deformationszone I im Vorderwagenbereich 3 sowie einer Deformationszone I im Hinterwagenbereich 15 und einer zwischen den beiden Deformationszonen I, II befindlichen Zone mit erhöhter Bauteilsteifigkeit, in der sich auch die Fahrgastzelle befindet. Die Deformationszonen I, II sowie die Zone III hoher Bauteilfestigkeit sind so ausgelegt, dass bei einem Frontcrash oder einem Heckcrash ein Insassenschutz gewährleistet ist.

Im Vorderwagenbereich 3 ist gemäß der Fig. 1 die Fahrbatterie 1 in der Fahrzeugquerrichtung y zwischen den beiden Längsträgern 5 angeordnet. Die Fahrbatterie 1 weist ein äußeres Batteriegehäuse 17 auf, das einen Speicherblock 18 gas- und flüssigkeitsdicht umschließt. Der Speicherblock 18 besteht aus einer Vielzahl von elektrochemisch arbeitenden Speicherzellen 19, die jeweils in Reihe geschaltet sind und über elektrisch leitfähige Kontaktelemente 20 mit hier nicht gezeigten Stromversorgungsleitungen des Fahrzeuges verbunden sind. Die einzelnen Speicherzellen 19 sind deformierbar ausgeführt und jeweils von einer einfach verformbaren folienartigen Hülle umgeben. Zudem sind die einzelnen Speicherzellen 19 in der Fahrzeugquerrichtung y über freie Deformationsspalte d voneinander beabstandet. Das Batteriegehäuse 17 ist dabei, wie auch die Hülle der einzelnen Speicherzellen aus einem einfach deformierbaren Material, etwa einem gummiartigen Hüllmaterial hergestellt.

Die Anschlusselemente 20 sind gemäß der Fig. 1 an der, vom vorderen Stoßfänger 7 abgewandten Seite der Fahrbatterie 1 angeordnet. Zudem befinden sich die Anschlusselemente 20 in Fahrzeuglängsrichtung x betrachtet auf gleicher Höhe wie die beiden äußeren Federbeinaufnahmen 9, die jeweils in der Zone III hoher Bauteilfestigkeit liegen. Demgegenüber ragt die Fahrbatterie 1 mit ihrem Speicherblock 18 in die Deformationszone I des Vorderwagens 3 hinein. Der Speicherblock 18 der Fahrbatterie 1 ist dabei als ein Deformationselement ausgelegt, das die vordere Deformationszone I bildet. Hierfür sind die Speicherzellen 17 mit den zwischengeordneten Deformationspalten d so ausgeführt, dass zumindest über einen Deformationsweg a gewährleistet bleibt, dass der Speicherblock 18 funktionsfähig verbleibt und das flexible Batteriegehäuse 17 gas- und flüssigkeitsdicht verbleibt.

Der Fahrbatterie 1 ist in der Fahrtrichtung FR ein weiteres Schutzelement 21 vorgelagert, das die Fahrbatterie 1 bei einem Frontalcrash A vor dem Eindringen spitzer Gegenstände schützt.

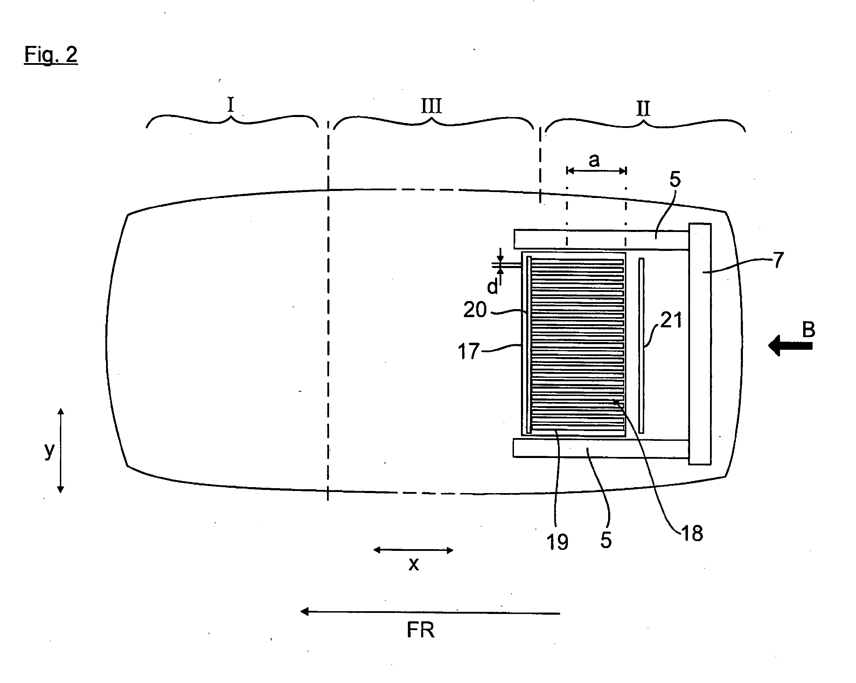

In der Fig. 2 ist die Fahrbatterie gemäß einem weiteren Ausführungsbeispiel im Hinterwagenbereich 15 des Fahrzeugs angeordnet. Die Anordnung in der Fig. 2 entspricht spiegelbildlich der in der Fig. 1 gezeigten Anordnung. Demzufolge ist die Fahrbatterie von einem heckseitigen Stoßdämpfer 7 sowie von seitlichen Längsträgern 5 rahmenartig umgeben. Im Hinblick auf eine Kurzschlusssicherheit kritischen Anschlusselemente 20 der Fahrbatterie 1 sind in der Fig. 2 insbesondere vor einem Heckaufprall B geschützt. Entsprechend sind die Anschlusselemente 20 der Fahrbatterie 1 in der Fahrtrichtung F dem Speicherblock 18 vorgelagert. Zwischen dem heckseitigen Stoßfänger 7 und der Fahrbatterie ist ebenfalls ein Schutzelement 21 angeordnet, das ebenfalls die Fahrbatterie vor dem Eindringen von spitzen Gegenständen schützt.

In der Fig. 2 sind die Anschlusselemente 20 ebenfalls nicht mehr im Deformationsbereich II des Hinterwagens 15 angeordnet, sondern befinden sich diese bereits in der hochsteifen Zone III des Fahrzeuges.

## Patentansprüche

1. Fahrzeug mit einem zumindest teilweisen elektrischen Antrieb, der eine Fahrbatterie (1) umfasst, wobei die Fahrbatterie (1) einen aus einer Mehrzahl von insbesondere elektrochemischen bzw. galvanischen Speicherzellen (19) bestehenden Speicherblock (18) aufweist, welche Speicherzellen (19) über elektrisch leitfähige Kontaktelemente (20) mit Stromversorgungsleitungen des Fahrzeugs verbunden sind, und wobei die Fahrbatterie (1) einen im Crashfall über einen Deformationsweg (a) verformbaren Deformationsbereich (18) aufweist, **dadurch gekennzeichnet, dass** das Fahrzeug zumindest eine vordefinierte Deformationszone (I, II), die im Crashfall (A, B) energieabsorbierend wirkt und in der der Deformationsbereich (18) der Fahrbatterie (1) angeordnet ist, und zumindest eine vordefinierte Zone (III) hoher Bauteilfestigkeit aufweist, die im Crashfall (A, B) im Wesentlichen ohne Deformation verbleibt, und dass die Kontaktelemente (20) der Fahrbatterie (1) in der Zone (III) hoher Bauteilsteifigkeit des Fahrzeugs angeordnet ist, und dass der Speicherblock (18) den im Crashfall deformierbaren Deformationsbereich (18) der Fahrbatterie (1) bildet.

2. Fahrzeug nach Anspruch 1, **dadurch gekennzeichnet, dass** die Speicherzellen (19) von einer einfach verformbaren, biegeschlaffen, folienartigen Hülle umgeben sind.

3. Fahrzeug nach Anspruch 1 oder 2, **dadurch gekennzeichnet, dass** die Speicherzellen (19) im Speicherblock (18) der Fahrbatterie (1) über freie Deformationsspalte (d) voneinander beabstandet sind.

4. Fahrzeug nach einem der vorhergehenden Ansprüche, **dadurch gekennzeichnet, dass** der Speicherblock (18) in einem Batteriegehäuse (17) gas- und flüssigkeitsdicht umschlossen ist, und dass insbesondere das Gehäuse (17) aus einem einfach deformierbaren Material, insbesondere einem gummiartigen Hüllmaterial, hergestellt ist.

5. Fahrzeug nach einem der vorhergehenden Ansprüche, **dadurch gekennzeichnet, dass** die elektrisch leitfähigen Anschlusselemente (20) der Fahrbatterie (1) auf der, der Krafteinleitung im Crashfall (A, B) abgewandten Seite der Batterie (1) angeordnet sind.

6. Fahrzeug nach einem der vorhergehenden Ansprüche, **dadurch gekennzeichnet, dass** der Fahrbatterie (1) auf ihrer der Krafteinleitung im Crashfall (A, B) zugewandten Seite ein Schutzelement (21) zur Kraftverteilung und/oder zum Schutz vor spitzen Gegenständen vorgelagert ist.

7. Fahrzeug nach einem der vorhergehenden Ansprüche, **dadurch gekennzeichnet, dass** die Fahrbatterie (1) im Vorderwagenbereich (3) angeordnet ist, und dass insbesondere der Speicherblock (18) den Anschlusselementen (20) der Fahrbatterie (1) in Fahrtrichtung (F) vorgelagert ist.

8. Fahrzeug nach Anspruch 7, **dadurch gekennzeichnet, dass** die Anschlusselemente (20) der Fahrbatterie (1) im Bereich zwischen den Federbeinauflagen (9) im Vorderwagen (3) des Fahrzeugs angeordnet sind.

9. Fahrzeug nach einem der Ansprüche 1 bis 8, **dadurch gekennzeichnet, dass** die Fahrbatterie (1) im Hinterwagenbereich (15) angeordnet ist, und dass insbesondere die Anschlusselemente (20) der Fahrbatterie (1) in Fahrtrichtung (F) dem Speicherblock (18) vorgelagert sind.

## Claims

1. Vehicle with an at least partially electric drive which includes a traction battery (1), the traction battery (1) comprising a storage unit (18) consisting of a plurality of, in particular, electrochemical or galvanic storage cells (19), said storage cells (19) being connected by electrically conductive contact elements (20) to current supply leads of the vehicle, and the traction battery (1) comprising a deformation region (18) which can be deformed over a deformation distance (a) in the event of a crash, **characterised in that** the vehicle comprises at least one pre-defined deformation zone (I, II) which acts to absorb energy in the event of a crash (A, B) and in which the deformation region (18) of the traction battery (1) is arranged, and at least one pre-defined zone (III) of high component strength which remains substantially undeformed in the event of a crash (A, B), and **in that** the contact elements (20) of the traction battery (1) are arranged in the zone (III) of high component strength of the vehicle, and **in that** the storage unit (18) forms the deformation region (18) of the traction battery which is deformable in the event of a crash (1).

2. Vehicle according to claim 1, **characterised in that** the storage cells (19) are surrounded by an easily deformable, pliable, film-like casing.

3. Vehicle according to claim 1 or 2, **characterised in that** the storage cells (19) in the storage unit (18) of the traction battery (1) are spaced from one another by free deformation gaps (d).

4. Vehicle according to one of the preceding claims, **characterised in that** the storage unit (18) is enclosed in gas- and fluid-tight manner in a battery housing (17), and **in that** the housing (17), in particular, is made from an easily deformable material, particularly a rubber-like casing material.

5. Vehicle according to one of the preceding claims, **characterised in that** the electrically conductive terminals (20) of the traction battery (1) are arranged on the side of the battery (1) that is remote from the application of force in the event of a crash (A, B).

6. Vehicle according to one of the preceding claims, **characterised in that** a protective element (21) for the distribution of force and/or for providing protection from sharp objects is mounted in front of the traction battery (1) on its side facing the application of force in the event of a crash (A, B).

7. Vehicle according to one of the preceding claims, **characterised in that** the traction battery (1) is arranged in the front end (3) of the vehicle, and **in that** the storage unit (18), in particular, is mounted in front of the terminals (20) of the traction battery (1) in the direction of travel (F).

8. Vehicle according to claim 7, **characterised in that** the terminals (20) of the traction battery (1) are arranged in the region between the suspension strut supports (9) in the front end (3) of the vehicle.

9. Vehicle according to one of claims 1 to 8, **characterised in that** the traction battery (1) is arranged in the rear end region (15) and **in that**, in particular, the terminals (20) of the traction battery (1) are mounted in front of the storage unit (18) in the direction of travel (F).

## Revendications

1. Véhicule comprenant un entraînement au moins en partie électrique, qui comprend une batterie motrice (1), où la batterie motrice (1) présente un bloc de stockage (18) constitué d'une pluralité d'éléments de stockage (19) en particulier électrochimiques ou galvaniques, lesquels éléments de stockage (19) sont reliés à des lignes d'alimentation en courant du véhicule par l'intermédiaire d'éléments de contact (20) électroconducteurs, et où la batterie motrice (1) présente une zone de déformation (18) pouvant se déformer sur une course de déformation (a) en cas de collision, **caractérisé en ce que** le véhicule présente au moins une zone de déformation (I, II) préalablement définie, qui exerce une action d'absorption d'énergie en cas de collision (A, B) et dans laquelle est disposée la zone de déformation (18) de la batterie motrice (1), et au moins une zone (III) préalablement définie à composants hautement solides, laquelle ne subit essentiellement aucune déformation en cas de collision (A, B), et **en ce que** les éléments de contact (20) de la batterie motrice (1) sont disposés dans la zone (III) à composants hautement solides du véhicule, et **en ce que** le bloc de stockage (18) constitue la zone de déformation (18), pouvant être déformée en cas de collision, de la batterie motrice (1).

2. Véhicule selon la revendication 1, **caractérisé en ce que** les éléments de stockage (19) sont entourés d'une enveloppe de type pelliculaire, souple en flexion, pouvant être déformée simplement.

3. Véhicule selon la revendication 1 ou 2, **caractérisé en ce que** les éléments de stockage (19) dans le bloc de stockage (18) de la batterie motrice (1) sont espacés les uns des autres par l'intermédiaire d'une fente de déformation (d) dégagée.

4. Véhicule selon l'une quelconque des revendications précédentes, **caractérisé en ce que** le bloc de stockage (18) est renfermé dans un carter de batterie (17) de manière étanche au gaz et au liquide, et **en ce qu'**en particulier le carter (17) est fabriqué à partir d'un matériau pouvant être déformé simplement, en particulier à partir d'un matériau d'enveloppe de type caoutchouc.

5. Véhicule selon l'une quelconque des revendications précédentes, **caractérisé en ce que** les éléments de connexion (20) électroconducteurs de la batterie motrice (1) sont disposés sur le côté, opposé à l'application de la force en cas de collision (A, B), de la batterie (1).

6. Véhicule selon l'une quelconque des revendications précédentes, **caractérisé en ce qu'**un élément de protection (21) servant à répartir la force et/ou servant à protéger contre des objets pointus est monté en amont de la batterie motrice (1) sur le côté de cette dernière tourné vers l'application de force en cas de collision (A, B).

7. Véhicule selon l'une quelconque des revendications précédentes, **caractérisé en ce que** la batterie motrice (1) est disposée dans la zone avant de voiture (3), et **en ce qu'**en particulier le bloc de stockage (18) est monté en amont des éléments de connexion (20) de la batterie motrice (1) dans le sens de la marche (F).

8. Véhicule selon la revendication 7, **caractérisé en ce que** les éléments de connexion (20) de la batterie motrice (1) sont disposés dans la zone entre les supports de jambe de force à ressort (9) dans la partie avant (3) du véhicule.

9. Véhicule selon l'une quelconque des revendications 1 à 8, **caractérisé en ce que** la batterie motrice (1) est disposée dans la zone arrière de voiture (15), et **en ce qu'**en particulier les éléments de connexion (20) de la batterie motrice (1) sont montés en amont du bloc de stockage (18) dans le sens de la marche (F).
